# EUROPÄISCHE PATENTANMELDUNG

(11) **EP 3 014 989 A1**
(43) Veröffentlichungstag der Anmeldung: **04.05.2016**
(21) Anmeldenummer: 15189382.3
(22) Anmeldetag: 12.10.2015
(51) Int. Cl.: A01K 27/00

(54) **TIERGESCHIRRSYSTEM**

(30) Priorität: 29.10.2014 DE 102014115700; 16.01.2015 DE 202015100197 U
(71) Anmelder: Löhden, Eva, 21684 Stade (DE)
(72) Erfinder: Löhden, Eva, 21684 Stade (DE)
(74) Vertreter: Hansen, Jochen

(57) **Zusammenfassung**

Die Erfindung betrifft Tiergeschirrsystem (1) mit wenigstens an zwei unterschiedlichen Körperbereichen eines Tieres anordenbaren Tiergeschirrabschnitten, wobei die Tiergeschirrabschnitte miteinander verbunden sind, wobei das Tiergeschirrsystem wenigstens zwei vorkonfektionierte Gurtelemente (11) und wenigstens ein Koppelelement (12) umfasst, wobei die vorkonfektionierten Gurtelemente an deren Enden jeweils ein erstes (112) und ein zweites (113) Verbindungselement aufweisen, und das Koppelelement mit wenigstens zwei und höchstens fünf Gurtelementen verbindbar ausgebildet ist, wobei die Verbindung zwischen Koppelelement und Gurtelement über das Verbindungselement am Ende des jeweiligen Gurtelementes lösbar und wiederverbindbar ausgebildet ist.

Ferner betrifft die Erfindung eine Karabinervorrichtung (2) für das erfindungsgemäße Tiergeschirrsystem.

## Beschreibung

Die Erfindung betrifft ein Tiergeschirrsystem für Tiere zum Halten, Führen und Trainieren dieser Tiere, insbesondere Hunde, Katzen, Pferde oder Ponys, mit wenigstens an zwei unterschiedlichen Körperbereichen eines Tieres anordenbaren Tiergeschirrabschnitten, wobei die Tiergeschirrabschnitte miteinander verbunden sind.

Ferner betrifft die Erfindung eine Karabinervorrichtung für das erfindungsgemäße Tiergeschirrsystem.

Aus dem Stand der Technik sind unterschiedliche Tiergeschirrsysteme bekannt.

Der Heimtiersektor wird überflutet von einer Vielzahl von Tiergeschirren und Einspannmodellen jeglicher Art für Kleintiere wie Hunde, Katzen aber auch für Pferde und dgl. Die Nachfrage nach gut passenden Einspannmodellen für Haustiere ist sehr groß. Gleichwohl bietet der Markt kein Tiergeschirrsystem an, was dieser Forderung tatsächlich entspricht und gleichzeitig kostengünstig herstellbar ist, da die Tiere allesamt unterschiedliche Körperbauten aufweisen und ein Universalmodell dieser Forderung nach einem guten Sitz nicht nachkommen kann.

Aus dem druckschriftlichen Stand der Technik sind weitere Tiergeschirrsysteme bekannt. Hierzu wird nachfolgend ausgeführt:
Aus der GB 2 228 660 A ist ein Tiergeschirrsystem bekannt, bei dem ein mit zwei Gurten versehenes in deren Länge einstellbares Führungsgeschirr offenbart ist, wobei die zwei unterschiedlichen Gurte, die jeweils um unterschiedliche Körperbereiche des Tieres herumgeführt werden, miteinander in einem Punkt fest und untrennbar vernietet oder vernäht sind.

In der WO 2004/002432 A2 ist eine Tiertrainingsvorrichtung offenbart, bei der ein Tiergeschirrsystem mit verstellbaren Gurten offenbart ist, wobei die Gurte um unterschiedliche Bereiche des Körpers eines Tieres geführt und in deren Länge einstellbar sind, wobei die wenigstens zwei Gurte in zwei gemeinsamen Punkten fest miteinander verbunden sind.

Ferner ist aus der US 5,370,083 B1 ein speziell ausgestaltetes Tiergeschirr entnehmbar, bei dem zwei Gurte, sich teilweise überkreuzend, in einem gemeinsamen Punkt festverbunden vereinigt werden, wobei die Gurte in deren Längen einstellbar sind und eine lösbare Verbindung zum Öffnen und Schließen des Tiergeschirrs vorgesehen ist.

Weiter ist aus der WO 2005/041645 A1 ein Tiergeschirr bekannt, bei dem wenigstens zwei Gurte, die in wenigstens zwei Punkten fest miteinander in nicht lösbarer Weise verbunden sind, um unterschiedliche Bereiche des Körpers eines Tieres geführt sind. Ein Gurt ist hierbei öffenbar und zudem in dessen Länge einstellbar. Die Öffenbarkeit der Gurte wird durch Klickverschlüsse realisiert.

Es gibt jedoch immer Probleme mit denen im Stand der Technik bekannten Tiergeschirrsystemen:
Tiere, die mit Haltesystemen und Gurtsystemen ausgestattet werden müssen, damit man diese führen oder mit ihnen arbeiten kann, benötigen individuelle Tiergeschirrsysteme. Diese Tiergeschirrsysteme müssen zudem auf die jeweilige Situation, wie Arbeiten, Mantrailing, Stadtgang usw. auf Grund der jeweils unterschiedlichen Zugbelastung angepasst bzw. unterschiedlich ausgestaltet werden.

Tiergeschirrsysteme sind in diesem Zusammenhang Hundegeschirre, Zaumzeuge oder ähnliche Gurtsysteme.

Bisher muss für jede Tierführungssituation ein separates Geschirr erworben werden, da diese entsprechend unterschiedlich ausgestaltet sein müssen, um die unterschiedlichen Lasten der Tiere beim Führen aufnehmen zu können ohne das geführte Tier beim Führen oder Trainieren zu verletzen. Neben den hohen Erstanschaffungskosten für die unterschiedlichen Tiergeschirrsysteme, die notwendig sind, um eine art- und tiergerechte Haltung des Tieres zu gewährleisten, müssen weitere Kosten aufgewandt werden, um während des Wachstums Anpassungen an den vorkonfektionierten Tiergeschirrsystemen vorzunehmen. Unter Umständen müssen auch während eines Tierlebens gleich mehrere Sets von Tiergeschirrsystemen erworben werden.

Der Stand der Technik bietet eine Vielzahl von Standardtiergeschirren an, die allesamt nicht universell anpassbar sind, weder an das Tierwachstum noch an die unterschiedlichen Trainingsbedingungen. Bisher müssen immer für ein Tier mehrere Tiergeschirrsysteme erworben werden, um sämtliche Belastungssituationen während des Tiertrainings abdecken zu können.

Trotz der vielen unterschiedlichen Modelle in Schnittform, Ausführung, Material, Farbe und Anwendungsspezifität existiert kein Modell, welches immer jedem Tier passt, wenn es verkauft wird. Ein Anpassen der bisher im Stand der Technik bekannten Tiergeschirrsysteme ist nicht vorgesehen, so dass nach dem Kauf eines passenden Tiergeschirrsystems immer bei einem späteren Anpassen ein neues Tiergeschirrsystem gekauft werden muss oder das alte Tiergeschirrsystem an den Hersteller eingeschickt und mit hohen Kosten überarbeitet werden muss.

Eine Maßanfertigung für ein Tiergeschirrsystem ist möglich, gleichwohl ist dieses in aller Regel vom Umtausch ausgeschlossen, wenn die angegebenen Maße korrekt in das

Tiergeschirrsystem übernommen worden sind. Trotz Maßanfertigung ist das Ergebnis jedoch in Bezug auf Passform und Sitz nicht zufrieden stellend.

Aufgrund dieser Probleme im Stand der Technik wird seitens der Erfinderin folgende erste zur Erfindung gehörende Aufgabe und Zielsetzung entwickelt:
Aufgabe und Ziel der Erfindung ist es ein Tiergeschirrsystem aufzuzeigen, mittels dessen eine Erziehung bzw. Training eines Tieres in allen nur erdenklichen Situationen, wie Arbeiten, Stadtgang und dgl., möglich ist, wobei zur Anpassung nur wenige Handgriffe notwendig sein sollen, um das Tiergeschirrsystem an die entsprechend durchzuführende Tiertrainingsmaßnahme anpassen zu können. Es soll möglich sein, alle erdenklichen Geschirr- und Einspannformen durch einfaches, schnelles und unkompliziertes Austauschen, Hinzufügen und/oder Entfernen einzelner Gurtelemente zu bilden, wobei dies bevorzugt unmittelbar am Tier selbst vorgenommen werden sollte bzw. könnte. Es soll diesbezüglich gerade nicht nur eine bestimmte Geschirr- oder Einspannform festgelegt werden, sondern ein höchstmögliches Maß an Flexibilität mit dem Tiergeschirrsystem erreicht werden.

Zudem soll auch das Wachstum des Tieres berücksichtigt sein und entsprechend das Tiergeschirrsystem kostengünstig und schnell anpassbar sein. Ebenso der Kostenaspekt in Bezug auf die Flexibilität durch Umrüstung, Gurtverlängerung sowie Gurtvarianten soll berücksichtigt werden, wobei auch unterschiedliche Gurtelementvarianten miteinander kombinierbar sein sollen.

Weiter sind aus dem Stand der Technik unterschiedliche Karabiner und Sicherungssysteme sowie Karabinervorrichtungen bekannt. Karabinervorrichtungen sind Haken mit einem Verschluss die ein Seil oder einen Gegenstand an einem Ring sichern, wobei die Karabinervorrichtung mit dem anderen Ende an einem anderen Seil oder anderen Ring sowie Sicherungsgegenstand verbunden ist.

Die unterschiedlichen Karabinerarten lassen sich in Normalkarabiner, Verschlusskarabiner und spezielle Karabinervorrichtungen einsortieren, wobei unterschiedliche Karabinervorrichtungen aufgrund deren Einsatzgebiete unterschiedliche Voraussetzungen und Bedingungen erfüllen müssen.

Karabinervorrichtungen sind in der Regel mit Verschlüssen ausgestattet, die ein schnelles Sichern und Lösen eines mit der Karabinervorrichtung zu sichernden Gegenstandes, beispielsweise ein Seil, Ring oder dergleichen ermöglichen sollen.

Ferner sind Tiergeschirrsysteme, beispielweise Hundegeschirre oder Zaumzeuge oder ähnliche Gurtsysteme, aus Gurtabschnitten und Sicherungselementen bestehende Systeme herstellbar, die ebenfalls über Karabinervorrichtungen miteinander zu Tiergeschirrsystemen verbindbar sind.

Zudem gibt es jedoch immer Probleme mit im Stand der Technik bekannten Karabinervorrichtungen, insbesondere für die Tiergeschirrsysteme, in diesen Bereichen:
Exemplarisch sei hier zunächst auf Tiergeschirre hingewiesen, bei denen Tiere, die mit Haltesystemen und Gurtsystemen ausgestattet werden müssen, damit man diese führen oder mit ihnen arbeiten kann, individuelle Tiergeschirrsysteme benötigen. Diese Tiergeschirrsysteme müssen zudem auf die jeweilige Situation, wie Arbeiten, Mantrailing, Stadtgang usw. auf Grund der jeweils unterschiedlichen Zugbelastung angepasst bzw. unterschiedlich ausgestaltet werden. Zur Umgestaltung derartiger Tiergeschirrsysteme bieten sich Karabinervorrichtungen als sichere Schnellverbindungen an. Dies soll nur eine exemplarische Erläuterung der möglichen Anwendung der erfindungsgemäßen Karabinervorrichtung darstellen, jedoch nicht die erfinderische Karabinervorrichtung beschränken.

Ein Herstellen von kraftschlüssigen Verbindungen zweier Gegenstände, beispielsweise Gurte, Ringe oder dergleichen, mit im Stand der Technik bekannten Karabinervorrichtungen führt in der Regel dazu, dass diese Verbindung eine erhebliche räumliche Ausdehnung aufweist. Insbesondere sind derartige Verbindungen nicht flach und können deswegen auch nicht flach anliegend sein.

Ferner besteht im Stand der Technik bei bekannten Karabinervorrichtungen, die zum Verschluss für ein Tiergeschirrsystem geeignet sein sollen, das Problem, dass diese eine große räumliche Ausdehnung bei Verbindungen zweier zu verbindender Gegenstände haben sowie weiter die Problematik der Sicherung eines Ringes oder anderen zu sichernden Gegenstandes gegen ungewolltes Lösen bzw. Herausrutschen aus der Karabinervorrichtung, da insbesondere bei herkömmlichen ausschließlichen Schiebe- oder Schraubsicherungen ein mögliches Versagen durch Schmutz, Sand und dergleichen nicht ausgeschlossen werden kann.

Aufgrund dieser Probleme im Stand der Technik wird seitens der Erfinderin folgende weitere zur Erfindung gehörende Aufgabe und Zielsetzung entwickelt:
Aufgabe und Ziel der Erfindung ist es, eine Karabinervorrichtung aufzuzeigen, mittels derer eine flach anliegende Verbindung von Gurten, Ringen oder dergleichen miteinander möglich ist, wobei nämlich ein Tiergeschirrsystem realisiert werden soll, wobei eine Sicherung eines zu sichernden Gegenstandes oder Objektes insbesondere auch ohne zusätzliche Schiebe- oder Schraubsicherung möglich sein soll.

Gelöst wird diese Aufgabe mit einem Tiergeschirrsystem gemäß dem Hauptanspruch sowie einer Karabinervorrichtung gemäß dem nebengeordneten Anspruch.

Das Tiergeschirrsystem umfasst wenigstens zwei vorkonfektionierte Gurtelemente und wenigstens ein Koppelelement, wobei die vorkonfektionierten Gurtelemente an deren Enden jeweils ein erstes und ein zweites Verbindungselement aufweisen, und das Koppelelement mit wenigstens zwei und höchstens fünf Gurtelementen verbindbar ausgebildet ist, wobei die Verbindung zwischen Koppelelement und Gurtelement über das Verbindungselement am Ende des jeweiligen Gurtelementes lösbar und wiederverbindbar ausgebildet ist.

Ein derartig ausgebildetes Tiergeschirrsystem ist insbesondere geeignet für Hunde, Katzen, Pferde, Ponys und dergleichen, wobei das Tiergeschirrsystem aus mehreren einzelnen, vorkonfektionierten und auswechselbaren Komponenten besteht und diese flexibel miteinander kombinierbar sind.

Die Mindestausstattung des Tiergeschirrsystems umfasst wenigstens ein Koppelelement und wenigstens zwei Gurtelemente.

Die Gurtelemente weisen gleiche und/oder unterschiedliche Längen in vorkonfektionierter Art auf, wobei deren Länge jedoch unveränderbar ist. Die Grundausstattung erfolgt in einem ersten individuellen Anpassungsprozess, bei dem aus einer Vielzahl von unterschiedlichen vorkonfektionierten langen Gurtelementen die richtige Länge herausgesucht und auf diese Weise ein erstes Tiergeschirrsystem zusammengestellt wird. Mit Hilfe weiterer Gurtelemente gleicher oder unterschiedlicher Länge können andere Tiergeschirrformen, beispielsweise Stadtgeschirr, Norwegergeschirr, Mantrailing-Geschirr, Arbeitsgeschirr und dergleichen ausgebildet werden.

Es ist nicht mehr notwendig für jede Trainings- bzw. Arbeitssituation, also auch beispielsweise beim einfachen Spazierengehen, jeweils ein eigenes Tiergeschirr vorzuhalten, sondern das Tiergeschirrsystem entsprechend umzubauen, anzupassen oder zu verändern, um so auf das entsprechende Tiergeschirr umzurüsten, welches den Anforderungen an die jeweilige Trainings- bzw. Arbeitssituation entspricht.

Die Koppelelemente sind als Ringe oder D-Ringe und die Verbindungselemente als Haken, Karabinerhaken, Flachkarabinerhaken ausgebildet.

Die Koppelelemente sind als wenigstens zwei und höchstens fünf sternförmig angeordnete Haken, Karabinerhaken und/oder Flachkarabinerhaken und die Verbindungselemente als Ringe oder D-Ringe ausgebildet.

Für die Verbindungselemente bieten sich Hakensysteme an, die flach ausgebildet sind und besonders bevorzugt einen Verschluss aufweisen. Diesbezüglich wird diesseits ein Flachkarabiner bevorzugt. Durch die flache Konstruktion ist ein hohes Maß an Tragekomfort und Schonung für das Tier gewährleistet.

Die Koppelelemente und die Verbindungselemente sind als Steck-Klick-Verschluss oder Steckschnallen ausgebildet, wobei bevorzugt das Koppelelement mehrere Aufnahmen für die Verbindung mit den Gurtelementen aufweist.

Die Koppelelemente sind also in einer einfachen Variante als Ringe ausgebildet. Weitere Ausgestaltungen sind die Ausführung als D-Ring zur Aufnahme der Koppelelemente oder Klippverbinder mit zwei, drei, vier oder fünf Anklippmöglichkeiten zur Aufnahme von Gurtelementen mit Klippverschluss. Als Materialien kommen Metall, wie Edelstahl oder verchromter Stahl, oder Kunststoff in Frage.

Die Gurtstücke sind aus Nylon, Leder, Polyurethan und/oder Polyurethan-ummanteltes Polyestergewebe gefertigt.

Die Gurtelemente bestehen aus einem Gurtstück und zwei Verbindungselementen, die jeweils an den Enden des Gurtstückes angeordnet sind und zur Befestigung an dem Koppelelement dienen. Für das Gurtstück können unterschiedliche Materialien oder auch Materialmixe zur Anwendung kommen, wobei hierzu insbesondere Nylongurtband, Leder, Polyurethanummanteltes Polyestergewebe (BioThane) zählen. Breite und Stärke des Gurtstückes ist individuell wählbar. Hinsichtlich der Farben und Farbkombination ist sehr viel Spielraum für Individualität gegeben.

Das Verbindungselement ist mit den Enden der Gurtstücke vernietet, verpresst, vernäht, verklemmt und/oder verklebt.

Die Verbindungselemente und/oder die Koppelelemente sind aus Metall gefertigt, insbesondere aus Edelstahl oder einem verchromten Metall.

Das Tiergeschirrsystem wird dementsprechend durch Kombination von gleichen und/oder auch unterschiedlichen vorkonfektionierten bzw. individuell vorkonfektionierten Gurtelementen mit dem oder den Koppelelementen hergestellt, bis die gewünschte bzw. in Abhängigkeit von dem anstehenden Tiertraining notwendige Tiergeschirrform erreicht ist.

Das Gurtelement wird bevorzugt an Ort und Stelle auf Maß gefertigt, indem Meterware des Gurtstückes vor Ort auf Länge zurechtgeschnitten wird und im Anschluss mit den Verbindungselementen versehen wird, beispielsweise durch Vernieten, Verklemmen oder Verpressen.

Das Gurtelement kann in der Länge insbesondere starr ausgebildet sein. Ferner kann das Gurtelement aber auch beliebig variabel ausgestaltet werden, bspw. durch Schieber, Schnallen oder ähnliches.

An die Ringe werden die Gurtelemente mit den jeweiligen Enden angeordnet, wodurch das Tierhaltegeschirr entsprechend den Anforderungen ausgebildet wird.

Als ergänzende Polsterelemente ist eine Polsterung aus Filz, Neopren und/oder Fell unter und/oder auf die Gurtelemente aufgebracht. Diesbezügliche weitere Ausgestaltungen sind möglich in Bezug auf die Wahl der Polsterung, wie Filz, Neopren, Fell, etc in beliebigen Formen, wie Y, T, Streifen-Polster, o.ä, wobei diese Polsterung bspw. rundgenäht über die Gurtelemente gezogen werden oder aber auch in flacher Form als Platte mittels elastischer Stoffstreifen oder Klettstreifen nachträglich angebracht werden können. Y-förmig ausgestaltete Elemente, Leinen- oder Führungshalteraufnahmen, ein Haltegriff und/oder eine Brustplatte sind in das Tiergeschirrsystem integriert. Zudem sind weiter möglich optionale Anbauelemente, wie Brustplatte und dgl., die mittels Ösen an die Verbindungselemente der Gurtelemente angefügt werden und so integriert werden können, wobei zumindest ein Koppelelement durch das Anbauelement, wie bspw. der Brustplatte gebildet wird.

Insbesondere ergeben sich durch die erfindungsgemäße Ausgestaltung des Tiergeschirrsystems Kosteneinsparungen in den Bereichen der Anschaffung, der Reparatur sowie der Anpassung während des Wachstums des Tieres.

Zudem ist das Tiergeschirrsystem in seiner Gesamtheit sehr gut individualisierbar und kostengünstig herstellbar. Insbesondere ist das Tiergeschirrsystem vor Ort in einem Tierzubehörfachgeschäft individuell anpassbar.

Das Tiergeschirrsystem ermöglicht somit eine bestmögliche Tierführung durch absoluten Sitz des Tiergeschirrsystems an dem Tier.

Die Karabinervorrichtung zur Aufnahme eines zu sichernden Sicherungsgegenstandes oder - elementes / Rings bzw. als wesentliches Verbindungselement des Tiergeschirrsystems weist ein geformtes Profilelement auf, wobei das geformte Profilelement einen Profilelementgurtaufnahmeabschnitt mit einer Gurtstückaufnahme zur Aufnahme eines Gurtes, eines Gurtabschnittes, eines zu befestigenden Elementes oder einer Befestigung, einen Profilelementaufnahmeabschnitt zur Aufnahme des zu sichernden Sicherungsgegenstandes oder -elementes / Rings und einen Profilelementsicherungsabschnitt zur Sicherung des zu sichernden Sicherungsgegenstandes oder -elementes / Rings in einer Aufnahme aufweist, wobei die Aufnahme von dem Profilelementsicherungsabschnitt und dem Profilelementaufnahmeabschnitt des geformten Profilelementes gebildet ist.

Durch diese Ausgestaltung dieser Karabinervorrichtung ist es möglich, eine minimal flache Verbindung eines Gurtes auf der einen Seite und mit einem Ring auf der anderen Seite herzustellen. Eine derartig ausgebildete Karabinervorrichtung erzeugt daher wenige Druckpunkte, wenn diese auf einem Objekt, einem Körper, einem Tier oder Mensch angelegt ist.

Der weitere wesentliche Aspekt der erfinderischen Karabinervorrichtung ist weiter, dass bei Verwendung eines Ringes als Gegenstück ein Lösen aufgrund der Geometrie der Karabinervorrichtung nur im waagerechten Zustand mit etwas Druck bzw. Kraft möglich ist, so dass ein selbsttätiges Lösen während des Gebrauchs nahezu ausgeschlossen ist und daher unmöglich sein dürfte.

Der Profilelementsicherungsabschnitt weist auf der Aufnahme zugewandten Seite eine ausgeformte Auswölbung auf, so dass ein in der Aufnahme eingebrachter zu sichernder Sicherungsgegenstand oder -element / Ring mechanisch im Bereich der Aufnahme gehalten wird, wobei hierdurch auf einfachste Weise eine Sicherung gegen ungewolltes Herausrutschen oder Herausgleiten gegeben ist. Beim Herstellen der Verbindung muss der zu sichernde Sicherungsgegenstand oder -element / Ring in die Aufnahmeöffnung eingeführt und im Bereich der Aufnahmeöffnungsverengung durch leichten Krafteinsatz hindurch gezogen werden, so dass sich die Aufnahmeöffnungsverengung kurzzeitig dehnt und so den zu sichernden Sicherungsgegenstand oder -element / Ring in die Aufnahme einführen lässt.

Der Profilelementgurtaufnahmeabschnitt des geformten Profilelementes ist als Profilelementaufnahmeabschnitt und Profilelementsicherungsabschnitt mit einer Aufnahme ausgebildet.

Insbesondere sind auch zwei Aufnahmeöffnungsverengungen vorgesehen, so dass ein zu sicherndes Ringelement oder ein zu sichernder Gegenstand doppelt gesichert werden kann und auf diese Weise ein unbeabsichtigtes Herausrutschen verhindert wird.

Alle Ausführungsformen werden derart verwendet, dass ein entsprechendes Dehnen des Bereiches zwischen dem Profilelementaufnahmeabschnitt und dem Profilelementsicherungsabschnitt notwendig ist, um ein zu sicherndes Ringelement oder einen zu sichernden Gegenstand einzuführen und zu sichern. Auf Grund der Größen sind entsprechende Dimensionen zu wählen.

Zur Sicherung des aufzunehmenden zu sichernden Sicherungsgegenstandes oder -elementes / Rings kann zum Verschließen ein Verriegelungsschieber an der Aufnahmeöffnung zusätzlich vorgesehen sein. Dieser wäre dann zusätzlich zu der ausgeformten Auswölbung vorgesehen. Der Verriegelungsschieber wäre als Schiebeelement ausgebildet, wobei dieses bevorzugt sicher- und/oder arretierbar ausgestaltet ist. Der Verriegelungsschieber kann auch als Federelement ausgebildet sein. Der Verriegelungsschieber ist auf der Oberseite mit einer griffigen Oberfläche ausgebildet.

Nachfolgend werden exemplarische Ausführungsbeispiele der Erfindung anhand der beiliegenden Zeichnungen detailliert beschrieben.

### Darin zeigen:

- Fig. 1: eine schematische Darstellung eines ersten Ausführungsbeispiels des erfindungsgemäßen Tiergeschirrsystems in einer Seitenansicht an einem Hund;
- Fig. 2: eine schematische Darstellung des in Fig. 1 dargestellten ersten Ausführungsbeispiels des erfindungsgemäßen Tiergeschirrsystems in einer Draufsicht;
- Fig. 3: eine schematische Darstellung des Gurtelementes;
- Fig. 4: eine schematische Darstellung eines zweiten Ausführungsbeispiels des erfindungsgemäßen Tiergeschirrsystems in einer Seitenansicht an einem Hund;
- Fig. 5: eine schematische Darstellung eines dritten Ausführungsbeispiels des erfindungsgemäßen Tiergeschirrsystems in einer Seitenansicht an einem Hund;
- Fig. 6: eine schematische Darstellung eines vierten Ausführungsbeispiels des erfindungsgemäßen Tiergeschirrsystems in einer räumlichen Darstellung;
- Fig. 7: eine schematische Darstellung eines fünften Ausführungsbeispiels des erfindungsgemäßen Tiergeschirrsystems in einer räumlichen Darstellung;
- Fig. 8: eine schematische Darstellung eines sechsten Ausführungsbeispiels des erfindungsgemäßen Tiergeschirrsystems in einer räumlichen Darstellung;
- Fig. 9: eine schematische Darstellung eines siebten Ausführungsbeispiels des erfindungsgemäßen Tiergeschirrsystems in einer räumlichen Darstellung;
- Fig. 10: eine schematische Darstellung eines ersten Ausführungsbeispiels des Gurtelementes, nämlich Gurtstück und erstes/zweites Verbindungselement in einer schematischen Seitenansicht;
- Fig. 11: eine schematische Darstellung eines zweiten Ausführungsbeispiels des Gurtelementes, nämlich Gurtstück und erstes/zweites Verbindungselement in einer schematischen Draufsicht;
- Fig. 12: eine schematische Darstellung eines dritten Ausführungsbeispiels des Gurtelementes, nämlich Gurtstück und erstes/zweites Verbindungselement in einer schematischen Draufsicht;
- Fig. 13: eine schematische Darstellung eines Teils des Tiergeschirrsystems, nämlich drei Gurtelemente an einem Koppelelement;
- Fig. 14: eine weitere schematische Darstellung eines Teils des Tiergeschirrsystems, nämlich vier Gurtelemente an einem Koppelelement;
- Fig. 15: eine schematische Darstellung eines ersten Ausführungsbeispiels der erfindungsgemäßen Karabinervorrichtung in einer Seitenansicht;
- Fig. 16: eine schematische Darstellung des ersten Ausführungsbeispiels der erfindungsgemäßen Karabinervorrichtung in einer Draufsicht;
- Fig. 17: eine schematische Darstellung eines zweiten Ausführungsbeispiels der erfindungsgemäßen Karabinervorrichtung mit einem Verriegelungsschieber in einer Seitenansicht;
- Fig. 18: eine schematische Darstellung des zweiten Ausführungsbeispiels der erfindungsgemäßen Karabinervorrichtung mit einem Verriegelungsschieber in einer Seitenansicht, wobei der Verriegelungsschieber geöffnet ist;
- Fig. 19: eine schematische Darstellung des zweiten Ausführungsbeispiels der erfindungsgemäßen Karabinervorrichtung mit einem Verriegelungsschieber in einer Draufsicht;
- Fig. 20: eine schematische Darstellung eines dritten Ausführungsbeispiels der erfindungsgemäßen Karabinervorrichtung in einer Draufsicht;
- Fig. 21: eine schematische Darstellung eines fünften Ausführungsbeispiels der erfindungsgemäßen Karabinervorrichtung in einer Seitenansicht;
- Fig. 22: eine schematische Darstellung des fünften Ausführungsbeispiels der erfindungsgemäßen Karabinervorrichtung in einer Draufsicht;
- Fig. 23: eine schematische Darstellung eines sechsten Ausführungsbeispiels der erfindungsgemäßen Karabinervorrichtung in einer Seitenansicht;
- Fig. 24: eine schematische Darstellung eines siebten Ausführungsbeispiels der erfindungsgemäßen Karabinervorrichtung in einer Draufsicht;
- Fig. 25: eine schematische Darstellung eines siebten Ausführungsbeispiels der erfindungsgemäßen Karabinervorrichtung in einer Seitenansicht und
- Fig. 26: eine schematische Darstellung eines siebten Ausführungsbeispiels der erfindungsgemäßen Karabinervorrichtung in einer räumlichen Darstellung.

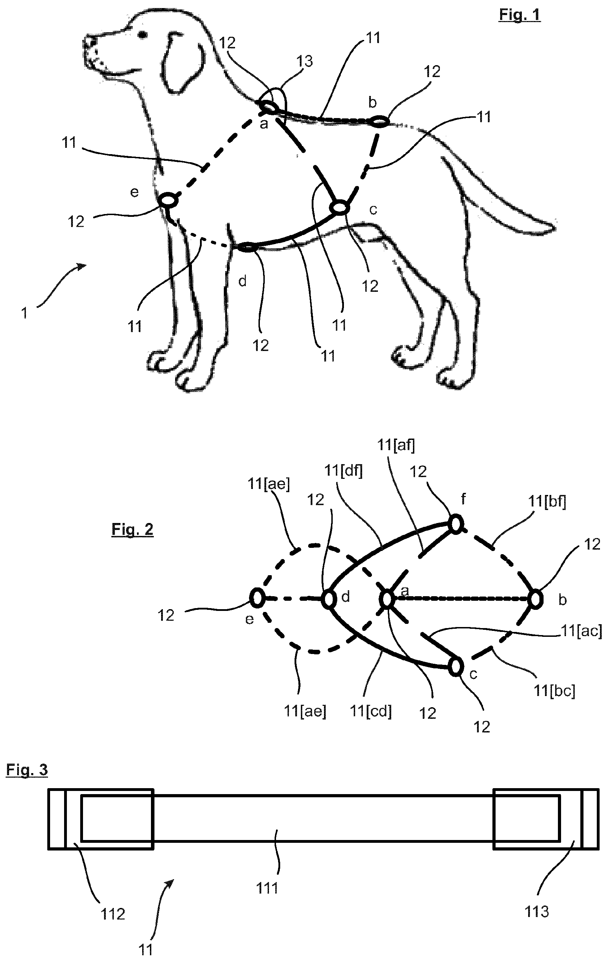

Fig. 1 zeigt eine schematische Darstellung eines ersten Ausführungsbeispiels des erfindungsgemäßen Tiergeschirrsystems 1 in einer Seitenansicht an einem Hund.

Das Tiergeschirrsystem 1 besteht im Wesentlichen aus Gurtelementen 11 und Koppelelementen 12. In diesem konkreten Ausführungsbeispiel sind sechs Koppelelemente 12 in Kombination mit zehn Gurtelementen 11 vorgesehen, um das Tiergeschirr an dem Hund zu realisieren.

Es sind die einzelnen Punkte, an denen Koppelelemente 12 vorgesehen sind, mit einem Buchstaben (a) bis (e) bzw. (f) [vgl. Fig. 2] gekennzeichnet. Diesbezüglich wird zur weiteren Ausgestaltung auf Fig. 2 verwiesen.

Das Tiergeschirrsystem 1 kann auf diese Art und Weise zunächst in einer ersten Ausgestaltung aufgebaut werden, indem zunächst die Punkte (a) und (e), in denen jeweils ein Koppelelement 12 vorgesehen ist, mit zwei Gurtelementen 11 verbunden werden. Im Anschluss daran werden die Punkte (a) und (e) mit weiteren Gurtelementen 11 und weiteren Koppelelementen 12 weiter ausgebaut, um so das volle Tiergeschirr aufzubauen.

Sobald einmal die richtige Größe und Länge der Gurtelemente 11 bestimmt wurde, kann das Tiergeschirrsystem 1 nur an wenigen Stellen durch kurzfristiges Lösen der Gurtelemente 11 von den Koppelelementen 12 von dem Tier abgenommen werden. Entsprechend schnell geht auch dann das erneute Anlegen des Tiergeschirrsystems 1.

Fig. 2 zeigt eine schematische Darstellung des in Fig. 1 dargestellten ersten Ausführungsbeispiels des erfindungsgemäßen Tiergeschirrsystems 1 in einer Draufsicht.

Hier sind die weiteren aus Fig. 1 nicht dargestellten Gurt- 11 sowie Koppelelemente 12 zu erkennen.

Es handelt sich um ein sehr komplexes Tiergeschirrsystem 1, das jedoch nur aus unterschiedlich langen Gurtelementen 11 und gleichartig ausgebildeten Koppelelementen 12 gebildet worden ist.

In Fig. 3 ist eine schematische Darstellung des Gurtelementes 11 dargestellt.

Das Gurtelement 11 besteht lediglich aus den drei Bestandteilen Gurtstück 111, erstes Verbindungselement 112 und zweites Verbindungselement 113.

Das erste 112 und zweite Verbindungselement 113 sind derart ausgebildet, dass sie mit dem Koppelelement 12, beispielsweise ein einfacher Ring, eine lösbare Verbindung bei erfindungsgemäßem Gebrauch eingehen.

Die Verbindungselemente 112, 113 werden einfach in das Koppelelement 12 eingehakt, eingeklipst oder eingesteckt, wodurch eine sichere Verbindung gewährleistet ist.

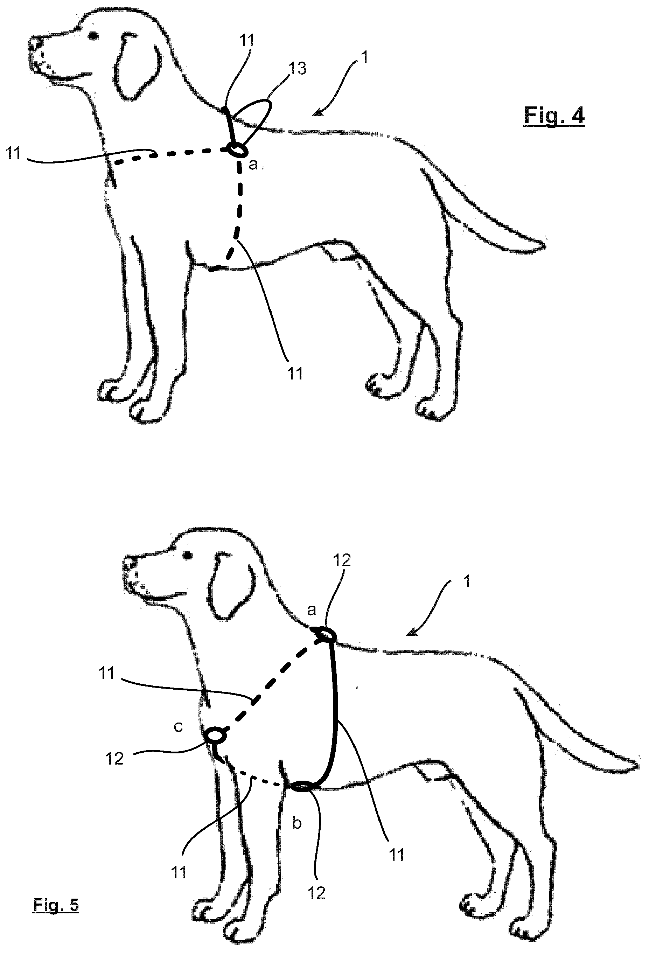

Fig. 4 zeigt eine schematische Darstellung eines zweiten Ausführungsbeispiels des erfindungsgemäßen Tiergeschirrsystems 1 in einer Seitenansicht an einem Hund.

Diese Ausführungsvariante kommt mit drei Gurtelementen 11 und zwei Koppelelementen 12 aus, um ein sehr einfach gehaltenes Geschirr zu bilden.

Ergänzend ist zwischen den beiden Koppelelementen 12 [(a) und (b), wobei (b) nicht dargestellt ist] ein Haltegriff 13 vorgesehen, um das Tier führen zu können.

In dieser Ausführungsvariante ist ausgehend von dem Koppelelement 12 in Punkt (a) ein Gurtelement 11 um den Bauch, ein Gurtelement 11 über den Widerrist und ein Gurtelement 11 im Bereich der Wamme bzw. Schulter zu dem weiteren Koppelelement 12 [nicht dargestellt (b)] geführt.

Die Ausbildung des jeweiligen Tiergeschirrs mittels des Tiergeschirrsystems 1 hängt von der Verwendung ab, insbesondere von der Trainingsart und den dabei auftretenden Belastungen. In Abhängigkeit vom Führen bzw. Arbeiten sind unterschiedliche Tiergeschirre notwendig, diese sind jedoch im Stand der Technik und der Tierlehre bekannt. Ziel ist es mittels des hier aufgezeigten Tiergeschirrsystems 1 flexibel im Aufbau als auch in der kurzfristigen Anpassung an die jeweilige Trainings- bzw. Führungssituation zu sein.

In Fig. 5 ist eine schematische Darstellung eines dritten Ausführungsbeispiels des erfindungsgemäßen Tiergeschirrsystems 1 in einer Seitenansicht an einem Hund dargestellt.

In diesem Ausführungsbeispiel sind drei Koppelelemente 12 vorgesehen, die miteinander über vier Gurtelemente 11 derart verbunden werden, dass das Koppelelement 12 im Punkt (a) mit dem Koppelelement 12 im Punkt (b) und Punkt (c) sowie entsprechend auf der nicht gezeigten Rückseite des Tieres nochmals miteinander verbunden werden, und weiter das Koppelelement 12 im Punkt (c) mit dem Koppelelement 12 im Punkt (b) durch ein weiteres Gurtelement 11 verbunden ist.

Eine Führungs- oder Halteleine könnte auf einfachste Weise in das Koppelelement 12 im Punkt (a) eingehakt werden.

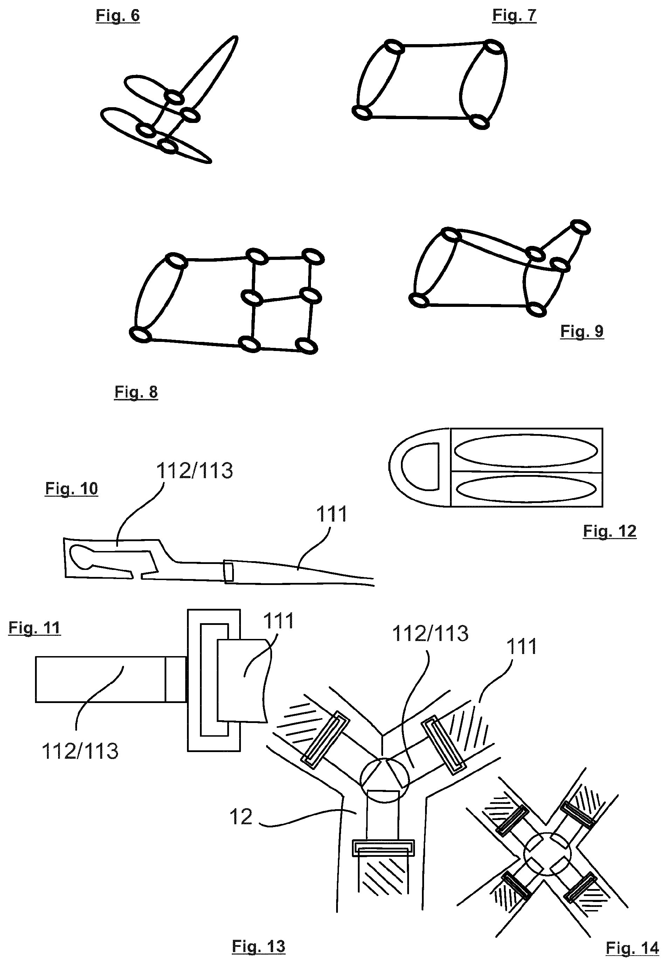

Die nachfolgenden Figuren 6 bis 9 dienen insbesondere der Erläuterung bzw. Visualisierung der großen Anpassbarkeit und Flexibilität des Tiergeschirrsystems 1.

Fig. 6 zeigt eine schematische Darstellung eines vierten Ausführungsbeispiels des erfindungsgemäßen Tiergeschirrsystems 1 in einer räumlichen Darstellung mit vier Koppelelementen 12 und sechs Gurtelementen 11. Hierbei handelt es sich um einen Halfter für Pony's und Pferde.

Fig. 7 zeigt eine schematische Darstellung eines fünften Ausführungsbeispiels des erfindungsgemäßen Tiergeschirrsystems 1 in einer räumlichen Darstellung mit vier Koppelelementen 12 und sechs Gurtelementen 11. Es ist ein Führ-/ Stadtgeschirr für Hunde dargestellt.

Fig. 8 zeigt eine schematische Darstellung eines sechsten Ausführungsbeispiels des erfindungsgemäßen Tiergeschirrsystems 1 in einer räumlichen Darstellung mit acht Koppelelementen 12 und elf Gurtelementen 11. Dargestellt ist ein Zug-/ Wagengeschirr für Hunde.

In Fig. 9 ist eine schematische Darstellung eines siebten Ausführungsbeispiels des erfindungsgemäßen Tiergeschirrsystems 1 in einer räumlichen Darstellung gezeigt, wobei sechs Koppelelemente 12 mit neun Gurtelementen 11 miteinander verbunden sind. Dieses Ausführungsbeispiel zeigt ein Zug-/ Hetzgeschirr für Hunde.

In Fig. 10 ist eine schematische Darstellung eines ersten Ausführungsbeispiels des Gurtelementes 11, nämlich Gurtstück 111 und erstes 112 / zweites Verbindungselement 113 in einer schematischen Seitenansicht dargestellt.

Das Verbindungselement 112, 113 ist als Flachkarabinerhaken ausgebildet und weist in einer bevorzugten Ausführungsform einen Schnapper/Verschluss auf, wobei in einer besonders bevorzugten Ausführungsform der Verschluss des Flachkarabinerhakens auf der Tier-zugewandten Seite angeordnet ist, wodurch sich ein Öffnen von selbst ausschließt.

Fig. 11 zeigt eine schematische Darstellung eines zweiten Ausführungsbeispiels des Gurtelementes 11, nämlich Gurtstück 111 und erstes 112 / zweites Verbindungselement 113 in einer schematischen Draufsicht.

Hierbei ist das Verbindungselement 112, 113 als Haken ausgebildet, wobei das Gurtstück 111 in einer Öse an dem Haken befestigt ist. Insbesondere ist der Haken flach ausgeführt.

Zusätzlich kann der Haken 112, 113 als auch das Gurtstück 111 auf der Tier-zugewandten Seite mit einer Polsterung versehen werden, um das Tier weiter zu schützen.

Fig. 12 zeigt eine schematische Darstellung eines dritten Ausführungsbeispiels des Gurtelementes 11, nämlich Gurtstück 111 und erstes 112 / zweites Verbindungselement 113 in einer schematischen Draufsicht, wobei in diesem Fall das Verbindungselement 113 als D-Öse ausgebildet ist und insbesondere mit einem Koppelelement 12 verbunden werden kann, welches mehrere Haken aufweist, beispielsweise drei bis fünf sternartig angeordnete Haken oder Flachkarabinerhaken.

In Fig. 13 ist eine schematische Darstellung eines Teils des Tiergeschirrsystems 1, nämlich drei Gurtelemente 11 an einem Koppelelement 12 dargestellt.

Das Koppelelement 12 ist in diesem Ausführungsbeispiel als Ring ausgebildet und nimmt die jeweiligen als Flachkarabinerhaken ausgebildeten Verbindungselemente 112, 113 der drei Gurtelemente 11 auf.

In Fig. 14 ist eine weitere schematische Darstellung eines Teils des Tiergeschirrsystems 1, nämlich vier Gurtelemente 11 an einem Koppelelement 12 dargestellt, wobei hier die Verbindungselemente 112, 113 als Flachhaken ausgebildet sind und in einen Ring 12 eingehängt sind.

Weitere in den Figuren jedoch nicht dargestellte ergänzende Komponenten im Sinne der Erfindung, die individuell im Sinne eines Baukastensystems an das Tiergeschirrsystem angefügt werden können, sind Polsterungen, streifenförmige Polster, gepolsterte Plattenelemente, wie eine Brustplatte und dergleichen.

Nachfolgend wird die erfindungsgemäße Karabinervorrichtung 2, die sowohl alleine von besonderer Bedeutung als auch zu dem Tiergeschirrsystem 1 gehörend ist, näher erläutert:

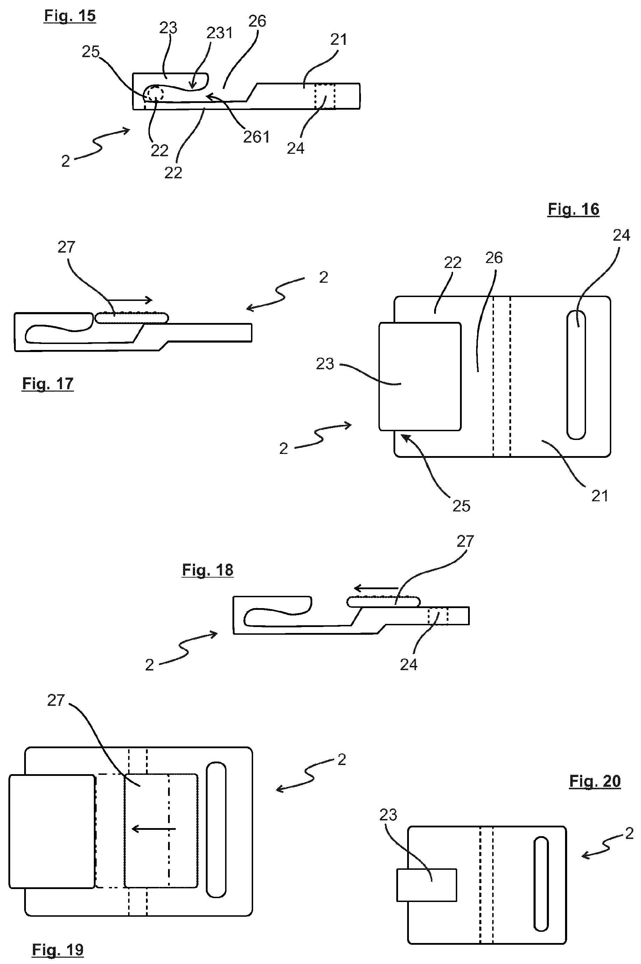

Fig. 15 zeigt eine schematische Darstellung eines ersten Ausführungsbeispiels der erfindungsgemäßen Karabinervorrichtung 2 in einer Seitenansicht.

Die Karabinervorrichtung 2 besteht aus einem geformten Profilelement. Das geformte Profilelement weist hierbei drei Abschnitte auf, nämlich einen

Profilelementgurtaufnahmeabschnitt 21, einen Profilelementaufnahmeabschnitt 22 und einen Profilelementsicherungsabschnitt 23.

Der Profilelementgurtaufnahmeabschnitt 21 weist eine Gurtstückaufnahme 24 auf, die im Wesentlichen ein Langloch ist und der Aufnahme eines Gurtabschnittes, eines Gurtelementes, eines Gurtes oder eines anderweitig zu sichernden Gegenstandes dient.

Der Profilelementaufnahmeabschnitt 22 stellt zusammen mit dem Profilelementsicherungsabschnitt 23 die Aufnahme 25 für den zu sichernden Sicherungsgegenstand oder -element / Ring 12 dar.

Zwischen dem Profilelementgurtaufnahmeabschnitt 21 und dem Profilelementsicherungsabschnitt 23 ist eine Aufnahmeöffnung 26 ausgebildet, die dazu dient den zu sichernden Sicherungsgegenstand oder -element / Ring 12 aufzunehmen und dessen Aufnahme in der Aufnahme 25 zu ermöglichen.

Der Profilelementsicherungsabschnitt 23 weist auf der Aufnahme 25 zugewandten Seite eine ausgeformte Auswölbung 231 auf, so dass ein in die Aufnahme 25 eingebrachter zu sichernder Sicherungsgegenstand oder -element / Ring 12 mechanisch im Bereich der Aufnahme 25 durch die ausgeformte Auswölbung 231 gehalten wird. Beim Einführen des zu sichernden Sicherungsgegenstandes oder -element / Ring 12 muss hierzu eine leichte Kraft aufgewandt werden, um den zu sichernden Sicherungsgegenstand oder -element / Ring 12 durch den Engpass der Aufnahmeöffnungsverengung 261 in die Aufnahme 25 einzuführen. Nach dem Einführen des zu sichernden Sicherungsgegenstandes oder -elementes / Rings 12 in die Aufnahme 25 wird dieser 12 in der Aufnahme quasi von selbst gehalten. Eine zusätzliche Sicherung bedarf es bei dieser besonderen Ausgestaltung nicht.

Fig. 16 zeigt eine schematische Darstellung des ersten Ausführungsbeispiels der erfindungsgemäßen Karabinervorrichtung 2 in einer Draufsicht.

In diesem Ausführungsbeispiel ist der Profilelementsicherungsabschnitt 23 schmaler ausgebildet als die Profilabschnitte 21 und 22, was den besonderen Vorteil hat, dass ein breiter Sicherungsgurt in der Gurtstückaufnahme 24 gesichert und in der Aufnahme 25 ein zu sichernder Ring 12 mit geringem Durchmesser gehalten werden kann.

In Fig. 17 ist eine schematische Darstellung eines zweiten Ausführungsbeispiels der erfindungsgemäßen Karabinervorrichtung 2 mit einem Verriegelungsschieber 27 in einer Seitenansicht dargestellt, wobei der Verriegelungsschieber 27 geschlossen ist.

Ferner weist der Verriegelungsscheiber 27 auf seiner Oberseite eine griffige Oberfläche auf, so dass die Karabinervorrichtung 2 im Einhandbetrieb betrieben werden kann.

Fig. 18 zeigt eine schematische Darstellung des zweiten Ausführungsbeispiels der erfindungsgemäßen Karabinervorrichtung 2 mit einem Verriegelungsschieber 27 in einer Seitenansicht, wobei der Verriegelungsschieber 27 geöffnet ist.

Fig. 19 zeigt eine schematische Darstellung des zweiten Ausführungsbeispiels der erfindungsgemäßen Karabinervorrichtung 2 mit einem Verriegelungsschieber 27 in einer Draufsicht.

In diesem Ausführungsbeispiel weist der Verriegelungsschieber 27 die gleiche Breite auf wie der Profilelementsicherungsabschnitt 23.

In Fig. 20 ist eine schematische Darstellung eines dritten Ausführungsbeispiels der erfindungsgemäßen Karabinervorrichtung 2 in einer Draufsicht dargestellt.

In diesem Ausführungsbeispiel ist der Profilelementsicherungsabschnitt 23 sehr schmal im Vergleich zu der Breite der Profilabschnitte 21 und 22 ausgebildet, was den besonderen Vorteil hat, dass erneut ein breiter Sicherungsgurt in den Gurtstückaufnahme 24 gesichert und in der Aufnahme 25 ein zu sichernder Ring 12 mit sehr geringem Durchmesser gehalten werden kann.

Weitere in den Figuren jedoch nicht dargestellte ergänzende Komponenten im Sinne der Erfindung, die individuell angefügt werden können, sind beispielsweise doppelte oder mehrfach ausgebildete Gurtstückaufnahmen 24 an einer Karabinervorrichtung 2, so dass mehrere Gurte mit einer Karabinervorrichtung 2 mit einem zu sichernden Sicherungsgegenstand oderelement / Ring 12 verbunden bzw. gesichert werden können.

Ferner besteht die Möglichkeit, was auch erfinderisch im Sinne dieser Erfindung ist, eine zweiseitig wirkende Karabinervorrichtung 2 zu verwenden, bei der das geformte Profilelement der Karabinervorrichtung 2 auf der ursprünglich als Profilelementgurtaufnahmeabschnitt 21 ausgebildeten Seite ebenfalls einen Profilelementaufnahmeabschnitt 22 und einen Profilelementsicherungsabschnitt 23 aufweist, wobei ebenfalls hierdurch eine Aufnahme 25 in erfinderischem Sinne gebildet wird.

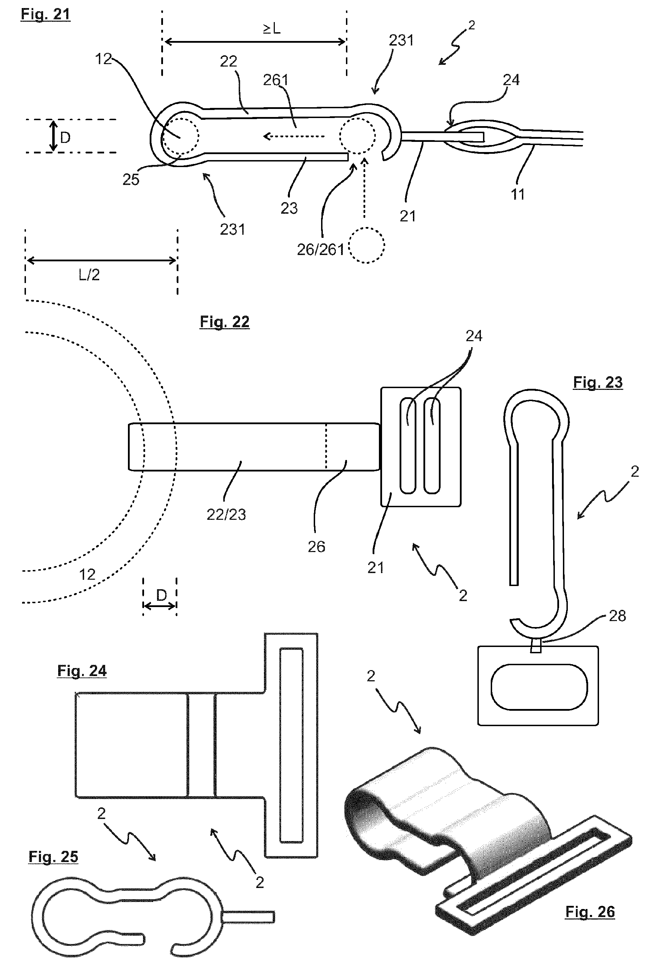

In Fig. 21 ist eine schematische Darstellung eines vierten Ausführungsbeispiels der erfindungsgemäßen Karabinervorrichtung 2 in einer Seitenansicht dargestellt.

Die Karabinervorrichtung 2 ist in diesem Ausführungsbeispiel als gebogene Form ausgebildet, wobei zum Einführen des Ringelementes 12 in die Aufnahmeöffnung 26 gleichzeitig eine Aufnahmeöffnungsverengung 261 überwunden werden muss, da diese Aufnahmeöffnung 26 minimalst kleiner ausgebildet ist als der Durchmesser des Ringelementes 12, so dass beim Einführen des Ringelementes 12 dieses mit einem Klick einrastet. Weiter wird das Ringelement 12 weiter in Richtung der Aufnahme für das zu sichernde Ringelement 25 fortgeschoben, wobei ebenfalls ein minimalst kleiner Widerstand überwunden werden muss, so dass beim Erreichen der Sicherungsposition innerhalb der Karabinervorrichtung 2 erneut das Ringelement 25 mit einem weiteren Klick einrastet und entgültig in der Aufnahme 25 gesichert ist.

In diesem Ausführungsbeispiel erfolgt daher eine doppelte Sicherung des zu sichernden Ringelementes 12.

Das Gurtband 11 ist in der Gurtstückaufnahme 24 entsprechend angeordnet.

Fig. 22 zeigt eine schematische Darstellung des vierten Ausführungsbeispiels der erfindungsgemäßen Karabinervorrichtung 2 in einer Draufsicht.

Die Gurtstückaufnahme 24 ist hier mit einem Steg ausgebildet.

In Fig. 23 ist eine schematische Darstellung eines fünften Ausführungsbeispiels der erfindungsgemäßen Karabinervorrichtung 2 in einer Seitenansicht gezeigt.

In diesem Fall ist die Gurtstückaufnahme 24 über einen Wirbier 28 mit der weiteren Karabinervorrichtung gekoppelt, wodurch ein Verdrehen des Gurtbandes möglich ist.

Die Ausführungsbeispiele vier und fünf zeigen insbesondere eine besonders bevorzugte Ausführungsform.

Insbesondere sind auch Kombinationen der zuvor aufgezeigten Ausführungsbeispiele besonders bevorzugt zu sehen und sind ebenfalls erfinderisch.

In Fig. 24 ist eine schematische Darstellung eines siebten Ausführungsbeispiels der erfindungsgemäßen Karabinervorrichtung 2 in einer Draufsicht dargestellt.

In Fig. 25 ist eine schematische Darstellung eines siebten Ausführungsbeispiels der erfindungsgemäßen Karabinervorrichtung 2 in einer Seitenansicht gezeigt.

Fig. 26 zeigt eine schematische Darstellung eines siebten Ausführungsbeispiels der erfindungsgemäßen Karabinervorrichtung 2 in einer räumlichen Darstellung.

Das in den Fig. 24 bis 26 dargestellte Ausführungsbeispiel stellt für das Tiergeschirrsystem ein Optimum dar, da insbesondere die Proportionen zueinander eine kostengünstige Produktion zulassen, wobei gleichzeitig die Sicherung gewährleistet ist.

### Bezugszeichenliste

- 1: Tiergeschirrsystem
- 11: Gurtelement, Gurtband
- 111: Gurtstück
- 112: erstes Verbindungselement
- 113: zweites Verbindungselement
- 114: Flachhaken
- 12: Koppelelement, Sicherungsgegenstand oder element / Ringelement
- 13: Haltegriff
- 2: Karabinervorrichtung
- 21: Profilelementgurtaufnahmeabschnitt
- 22: Profilelementaufnahmeabschnitt
- 23: Profilelementsicherungsabschnitt
- 231: Auswölbung
- 24: Gurtstückaufnahme
- 25: Aufnahme für zu sichernden Sicherungsgegenstand oder -element
- 26: Aufnahmeöffnung
- 261: Aufnahmeöffnungsverengung
- 27: Verriegelungsschieber
- 28: Wirbler
- a,..., f: Verbindungspunkte
- [xy]: Gurtelementverbindungen

## Patentansprüche

1. Tiergeschirrsystem (1) mit wenigstens an zwei unterschiedlichen Körperbereichen eines Tieres anordenbaren Tiergeschirrabschnitten, wobei die Tiergeschirrabschnitte miteinander verbunden sind,
**dadurch gekennzeichnet, dass**
das Tiergeschirrsystem (1):
- wenigstens zwei vorkonfektionierte Gurtelemente (11) und
- wenigstens ein Koppelelement (12)
umfasst,
wobei
- die vorkonfektionierten Gurtelemente (11) an deren Enden jeweils ein erstes (112) und ein zweites Verbindungselement (113) aufweisen,
und
- das Koppelelement (12) mit wenigstens zwei und höchstens fünf Gurtelementen (11) verbindbar ausgebildet ist,
wobei die Verbindung zwischen Koppelelement (12) und Gurtelement (11) über das Verbindungselement (112, 113) am Ende des jeweiligen Gurtelementes (11) lösbar und wiederverbindbar ausgebildet ist.

2. Tiergeschirrsystem (1) nach Anspruch 1,
**dadurch gekennzeichnet, dass**
die Gurtelemente (11) gleiche und/oder unterschiedliche Längen in vorkonfektionierter Art aufweisen, wobei deren Länge unveränderbar ist.

3. Tiergeschirrsystem (1) nach Anspruch 1 oder 2,
**dadurch gekennzeichnet, dass**
- die Koppelelemente (12) als Ringe oder D-Ringe
und
- die Verbindungselemente (112, 113) als Haken, Karabinerhaken, Flachkarabinerhaken (114) ausgebildet sind.

4. Tiergeschirrsystem (1) nach Anspruch 1 oder 2,
**dadurch gekennzeichnet, dass**
- die Koppelelemente (12) als wenigstens zwei und höchstens fünf sternförmig angeordnete Haken, Karabinerhaken und/oder Flachkarabinerhaken (114)
und
- die Verbindungselemente (112, 113) als Ringe oder D-Ringe ausgebildet sind.

5. Tiergeschirrsystem (1) nach Anspruch 1 oder 2,
**dadurch gekennzeichnet, dass**
die Koppelelemente (12) und die Verbindungselemente (112, 113) als Steck-Klick- Verschluss oder Steckschnallen oder als Karabinervorrichtung (2) - Ring ausgebildet sind, wobei bevorzugt das Koppelelement mehrere Aufnahmen für die Verbindung mit den Gurtelementen (11) aufweist.

6. Tiergeschirrsystem (1) nach einem der vorangehenden Ansprüche,
**dadurch gekennzeichnet, dass**
die Gurtstücke (111) aus Nylon, Leder, Polyurethan und/oder Polyurethanummanteltes Polyestergewebe gefertigt sind.

7. Tiergeschirrsystem (1) nach einem der vorangehenden Ansprüche,
**dadurch gekennzeichnet, dass**
als ergänzende Polsterelemente eine Polsterung aus Filz, Neopren und/oder Fell unter und/oder auf die Gurtelemente (11) aufgebracht ist.

8. Tiergeschirrsystem (1) nach einem der vorangehenden Ansprüche,
**dadurch gekennzeichnet, dass**
Y-förmig ausgestaltete Elemente, Leinen- oder Führungshalteraufnahmen, ein Haltegriff (13) und/oder eine Brustplatte in das Tiergeschirrsystem integriert sind.

9. Karabinervorrichtung (2) zur Aufnahme eines zu sichernden Sicherungsgegenstandes oder -elementes / Rings (12), insbesondere für das und an dem Tiergeschirrsystem (1) nach einem der vorangehenden Ansprüche, mit:
- einem geformten Profilelement,
wobei das geformte Profilelement
- einen Profilelementgurtaufnahmeabschnitt (21) mit einer Gurtstückaufnahme (24) zur Aufnahme eines Gurtes, eines Gurtabschnittes, eines zu befestigenden Elementes oder einer Befestigung,
- einen Profilelementaufnahmeabschnitt (22) zur Aufnahme des zu sichernden Sicherungsgegenstandes oder -elementes / Rings (12)
und
- einen Profilelementsicherungsabschnitt (23) zur Sicherung des zu sichernden Sicherungsgegenstandes oder -elementes / Rings (12) in einer Aufnahme (25), wobei die Aufnahme (25) von dem Profilelementsicherungsabschnitt (23) und dem Profilelementaufnahmeabschnitt (22) des geformten Profilelementes gebildet ist.

10. Karabinervorrichtung (2) nach Anspruch 9,
**dadurch gekennzeichnet, dass**
der Profilelementsicherungsabschnitt (23) auf der Aufnahme (25) zugewandten Seite eine ausgeformte Auswölbung (231) aufweist, so dass ein in der Aufnahme (25) eingebrachter zu sichernder Sicherungsgegenstand oder -element / Ring (12) mechanisch im Bereich der Aufnahme (25) gehalten wird.

11. Karabinervorrichtung (2) nach Anspruch 9 oder 10,
**dadurch gekennzeichnet, dass**
zwei Aufnahmeöffnungsverengungen (261) vorgesehen sind.

12. Karabinervorrichtung (2) nach Anspruch 9, 10 oder 11,
**dadurch gekennzeichnet, dass**
der Profilelementgurtaufnahmeabschnitt 21 des geformten Profilelementes als Profilelementaufnahmeabschnitt 22 und Profilelementsicherungsabschnitt 23 mit einer Aufnahme 25 ausgebildet ist.

13. Karabinervorrichtung (2) nach einem der Ansprüche 9 bis 12,
**dadurch gekennzeichnet, dass**
zur Sicherung des aufzunehmenden zu sichernden Sicherungsgegenstandes oder - elementes / Rings (12) zum Verschließen ein Verriegelungsschieber (27) an der Aufnahmeöffnung (26) vorgesehen ist.
